# EUROPEAN PATENT SPECIFICATION

(11) **EP 3 981 495 B1**
(45) Date of publication and mention of the grant of the patent: **21.02.2024**
(21) Application number: 21194028.3
(22) Date of filing: 31.08.2021
(51) Int. Cl.: B01D 46/71, B01D 46/90

(54) **DEVICE FOR THE PREPARATION OF CLEANING COMPRESSED AIR ON AN AIR-COOLING MACHINE**
VORRICHTUNG ZUR AUFBEREITUNG VON REINIGUNGSDRUCKLUFT IN EINER LUFTKÜHLUNGSMASCHINE
DISPOSITIF DE PRÉPARATION DE NETTOYAGE D'AIR COMPRIMÉ SUR UNE MACHINE DE REFROIDISSEMENT À AIR

(30) Priority: 08.10.2020 CZ 20200547
(43) Date of publication of application: 13.04.2022
(73) Proprietor: Mirai Intex Sagl, 6830 Chiasso (CH)
(72) Inventor: Tsyplakov, Vladyslav, 1290 Versoix (CH)
(74) Representative: Musil, Dobroslav

(56) References cited:
- US-A- 4 317 665
- US-A1- 2002 000 096
- US-A1- 2018 015 403

## Description

### Technical field

The invention relates to a device for the preparation of cleaning compressed air on an air-cooling machine, in which a system of at least two filters of solid water particles is arranged between an air outlet from a cooling chamber and an inlet to the cooling machine.

### Background art

Various methods of cleaning filters from frozen moisture, i.e., snow and/or ice, are currently known, such as cleaning with mechanical scrapers, using ultrasonic waves or thawing with a heating rod. The known methods are either energy intensive or cannot be used at low temperatures, for example -110 °C.

Fabric filters designed to clean air from dust and a system for their cleaning by means of counter current air flow can be considered as the closest state of the art. The above-mentioned filter comprises a support structure and a fabric sleeve in its basic embodiment. During operation, dust-laden air passes through the filter on the surface of which dust is trapped and, after passing through the filter, the purified air is led to an air system. Cleaning the filter from dust is performed by introducing counter current air flow to the clean side of the filter. Due to the passage of the counter current air flow through the filter, dust is removed from the filter surface. However, neither the filter nor the cleaning system is suitable for low temperatures, such as -110 °C, and cannot be used for removing frozen moisture from the filter surface.

US4317665A discloses a bag filter for capturing ice particles of having a sizer of 1 micron or larger from air flowing from the outer side of the bag on which the ice is trapped, and clean, ice-free air is drawn from the inner side of the bag. If a quantity of ice is deposited on the outer side of the bag which prevents the passage of the air, compressed air is fed into the interior of the bag which inflates the bag and, as a result of the bag deformation, the ice falls off the outer surface of the bag and is discharged out of the device. However, this is not the case for very low temperatures of for example -110 °C, where the stickiness of the snow and ice on the filter is so high that the increase in pressure inside the bag alone is not sufficient to remove the icy layer.

The solution according to US2018015403A1 is based on a similar principle, in which air containing ice particles is also supplied to the outer surface of a cylindrical and conical filter, or to a filter of another three-dimensional shape. The filter contains a bag, on the outer side of which ice is trapped, and is removed by inflating the bag with a pulse of compressed air supplied to the inner space of the bag. However, this does not apply to very low temperatures, for example - 110 °C, where the stickiness of the snow and ice on the filter is so high that the mere increase in pressure inside the bag using the pressure pulse is not sufficient to remove the icy layer.

The objective of the invention is to provide a device for an air-cooling machine which will be able to remove frozen moisture from filters well even at very low temperatures, for example -110 °C.

### Principle of the invention

The objective of the invention is achieved by a device for the preparation of cleaning compressed air on an air cooling machine, in which a system of at least two filters of solid water particles is arranged between an air outlet of a cooling chamber and an inlet to the cooling machine, whereby the principle of the invention consists in that the device comprises a pressure cylinder provided with at least one inlet of compressed air and at least one outlet of compressed air which is connected via at least one quick-acting valve to the outlets of at least two filters of solid water particles. Once a specified amount of solid water particles has settled on the filters, the passage of cooling air through the filters is stopped and the quick-acting valves open to introduce cleaning compressed air to the filter outlets which releases snow and/or ice from the filter screens which falls due to gravity and is discharged by any of the known methods. Subsequently, the passage of cooling air through the filters is resumed.

The pressure cylinder is provided with two inlets of compressed air, the first inlet of which is connected to an inlet of atmospheric air via a first check valve, an air cooler, a piston compressor and an inlet valve, and the second inlet of which is connected to the inlet of compressed air via a second check valve. The device in this embodiment is capable of operating with both atmospheric air supply and compressed air supply.

If the device comprises at least two filters of solid water particles and their outlets are connected to the pressure cylinder via individually controlled quick-acting valves, the filters can be cleaned without interrupting the passage of cooling air passing through the other filter while one of the filters is being cleaned.

### Description of the drawings

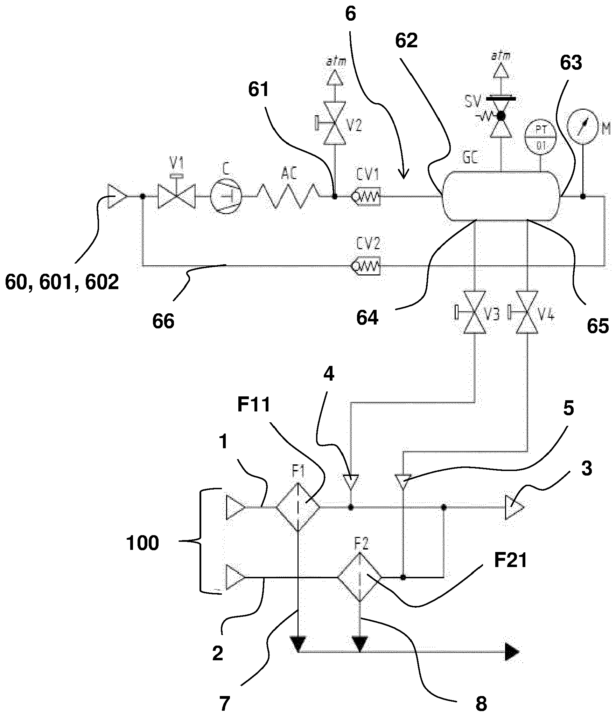

An exemplary embodiment of the device is schematically represented in the accompanying drawing.

### Examples of embodiment

In air-cooling machines, air which is used as a refrigerant contains water in the form of water vapour, which, however, solidifies at temperatures below 0 ° C. In order to prevent the entry of solid water particles, i.e., of snow and/or ice, into air ducts and other components of a cooling machine system, filters are used, which are usually located downstream of a cooling chamber and in which solid water particles are trapped. Filters are formed by a hollow body into whose cavity air is introduced from one side from the cooling chamber and on the other side, the clean air is delivered to the air-cooling machine, whereby in the cavity a filter screen is mounted.

In the illustrated embodiment, the air outlet **100** from the unillustrated cooling chamber is divided into two branches **1** and **2,** in which filters **F1** and **F2** are installed, the outlets **F11**, **F21** of which are led to a cooling air inlet **3** to an unillustrated air-cooling machine. The number of branches into which the air outlet from the cooling chamber is divided, as well as the number of filters, may be different than in the illustrated embodiment. The outlets **F11**, **F21** of the filters **F1** and **F2** are connected to the inlets **4** and **5** of the cleaning compressed air from the device **6** for the preparation of cleaning compressed air. The individual filters **F1** and **F2**, or their filter screens, are associated with gravity outlets **7**, **8** of snow and/or ice into an unillustrated known collecting container of snow and/or ice, from which snow and/or ice, i.e., the solid water particles, are discharged by any of the known methods.

The device **6** for the preparation of cleaning compressed air is provided with an air inlet **60** through which either atmospheric air **601** having a pressure of 1 bar, or compressed air **602** is supplied. Atmospheric air **601** is supplied through an inlet valve **V1** to the inlet of a piston compressor **C**, in which it is compressed and via an air cooler **AC** and a first check valve **CV1** it is supplied to a first inlet **62** of a pressure cylinder **GC**. The pressure cylinder **GC** is provided with a safety valve **SV**, through which, in the event of overpressure in the pressure cylinder **GC**, air is discharged into the environment. For monitoring air pressure in the pressure cylinder **GC**, the pressure cylinder **GC** is provided with a pressure sensor **PT.** Between the air cooler **AC** and the first check valve **CV1**, an air outlet **61** is located, provided with a discharge valve **V2**, which serves to reduce the pressure during the start-up of the piston compressor **C**. Air pressure in the pressure cylinder **GC** is from 2 to 3 bar.

The inlets **4**, **5** of cleaning compressed air to the outlets **F11**, **F21** of the individual filters **F1, F2** are connected to the outlets **64**, **65** of the pressure cylinder **GC** via quick-acting valves **V3**, **V4**.

The air inlet **60** to the device **6** for the preparation of cleaning compressed air is for supplying compressed air **602** connected before the inlet valve **V1** by a bypass line **66** to a second outlet **63** of the pressure cylinder **GC**, whereby a second check valve **CV2** is arranged in the bypass line **66**. The bypass line **66** serves to supply air which has sufficient pressure to the pressure cylinder **GC**. A pressure gauge **M** is mounted in the bypass line **66** for pressure monitoring. In an unillustrated embodiment, compressed air **602** is not supplied, and so the bypass line is not used.

As air from the unillustrated cooling chamber is led through the filters **F1** and **F2** back to the air-cooling machine, moisture in the form of snow and/or ice is deposited on the filters **F1**, **F2**. During the passage of the cooling air through the filters **F1**, **F2**, the pressure in front of the filters **F1**, **F2** is monitored in a known manner (not shown) and once the set overpressure has been reached, the passage of the cooling air through the filters **F1**, **F2** is stopped and the quick-acting valves **V3**, **V4** open, through which the cleaning compressed air is brought to the outlets **F11**, **F21** of the filters **F1**, **F2**. Due to the action of this flow of cleaning compressed air, snow and/or ice is released from the filter screens of the respective filters **F1**, **F2** and due to gravity falls through the respective gravity outlets **7**, **8** into the collecting container of snow and/or ice, from which the snow and/or ice is discharged by any of the known methods. After cleaning the filter screens of the filters **F1**, **F2**, the passage of the cooling air through the filters **F1**, **F2** is resumed and the supply of cleaning air is stopped. To perform this function, the pair of quick-acting valves **V3**, **V4** can be replaced by one quick-acting valve, the connection of the quick-acting valve to the outlets **F11** and **F21** of the filters **F1**, **F2** being made by one or two lines of compressed air.

If the device comprises at least two filters **F1**, **F2**, it is possible to clean the filters **F1**, **F2** without interrupting the passage of the cooling air which passes through the other filter **F2**, **F1**, while one of the filters **F1**, **F2** is being cleaned.

### Industrial applicability

The invention belongs to the field of refrigeration technology and can be used for producing refrigeration units, freezing chambers, rapid cooling systems, air conditioning systems and/or temperature maintenance systems.

The device for the preparation of cleaning compressed air is applicable to air-cooling machines and other devices that use compressed dry air as a working medium.

### List of references

- V1: valve
- C: piston compressor
- AC: air cooler
- CV1: first check valve
- CV2: second check valve
- SV: safety valve
- V2: discharge valve
- GC: pressure cylinder
- PT: pressure sensor
- M: pressure gauge
- V3: quick-acting valve
- V4: quick-acting valve
- F1: filter
- F11: filter outlet
- F2: filter
- F21: filter outlet
- 100: air outlet from the cooling chamber
- 1, 2: branches of the air outlet from the cooling chamber
- 3: inlet of the cooling air to the machine
- 4, 5: inlets of cleaning compressed air to the outlets of the filters
- 6: device for the preparation of the cleaning compressed air
- 60: air inlet
- 601: atmospheric air
- 602: compressed air
- 61: air outlet
- 62: first inlet of the pressure cylinder
- 63: second inlet of the pressure cylinder
- 64, 65: outlets of the pressure cylinder
- 66: by-pass line of compressed air
- 7, 8: gravity outlet of solid water particles

## Claims

1. A device for the preparation of cleaning compressed air adapted to clean filters (F1, F2) of solid water particles on an air cooling machine, which are arranged between an air outlet (100) from a cooling chamber of the cooling machine and an air inlet (3) to the cooling machine, wherein the device comprises a pressure cylinder (GC) provided with at least one inlet (62, 63) of compressed air and at least one **outlet** (64, 65) of cleaning compressed air, which is via at least one quick-acting valve (V3, V4) connectable to the outlets (F11, F21) of at least two filters (F1, F2) of solid water particles from the cooling air, **characterized in that** the pressure cylinder (GC) is provided with two inlets (62, 63) of compressed air, wherein the first inlet (62) is connected to an inlet (601) of atmospheric air via a first check valve (CV1), an air cooler (AC), a piston compressor (C) and an inlet valve (V1) and the second inlet (63) of the pressure cylinder (GC) is connected by a bypass line (66) of compressed air to an inlet (602) of compressed air via a second check valve (CV2), wherein independently controllable quick-acting valves (V3, V4) are inserted between the outlets (64, 65) of the cleaning compressed air from the pressure cylinder (GC) and the inlets (4, 5) of the cleaning compressed air to the outlets (F11, F21) of the filters (F1, F2).

## Patentansprüche

1. Druckreinigungsluftaufbereitungsvorrichtung, die für die Reinigung der Wasserpartikelfilter (F1, F2) einer Luftkältemaschine geeignet ist, die zwischen dem Luftauslass (100) der Kühlkammer der Kältemaschine und dem Lufteinlass (3) der Kältemaschine angeordnet ist, wobei die Vorrichtung einen Druckzylinder (GC) umfasst, der mit mindestens einem Einlass (62, 63) von Druckluft und mindestens einem Auslass (64, 65) von Reinigungsdruckluft versehen ist, der über mindestens ein Hochgeschwindigkeitsventil (V3, V4) mit den Auslässen (F11, F21) von mindestens zwei Wasserpartikelfiltern (F1, F2) aus der Kühlluft verbindbar ist, **dadurch gekennzeichnet, dass** der Druckzylinder (GC) mit zwei Einlässen (62, 63) für Druckluft versehen ist, wobei der erste Einlass (62) über ein erstes Rückschlagventil (CV1), einen Luftkühler (AC), einen Kolbenkompressor (C) und ein Einlassventil (V1) mit einem Einlass (601) für atmosphärische Luft verbunden ist und der zweite Einlass (63) des Druckzylinders (GC) über eine Bypassleitung (66) für Druckluft über ein zweites Rückschlagventil (CV2) mit einem Einlass (602) für Druckluft verbunden ist, wobei zwischen den Auslässen (64, 65) der Reinigungsdruckluft aus dem Druckzylinder (GC) und den Einlässen (4, 5) der Reinigungsdruckluft zu den Auslässen (F11, F21) der Filter (F1, F2) unabhängig steuerbare Schnellschlussventile (V3, V4) eingesetzt sind.

## Revendications

1. Dispositif de préparation d'air de nettoyage sous pression, adapté au nettoyage des filtres (F1, F2) à particules solides d'eau sur une machine de refroidissement à air disposés entre la sortie (100) d'air de la chambre de refroidissement de la machine de refroidissement et l'entrée (3) d'air de la machine de refroidissement, tandis que le dispositif comprend un cylindre de pression (GC) pourvu d'au moins une entrée (62, 63) d'air sous pression et d'au moins une sortie (64, 65) d'air de nettoyage sous pression, qui peut être raccordé par au moins une vanne à grande vitesse (V3, V4) aux sorties (F11, F21) d'au moins deux filtres (F1, F2) à particules solides d'eau de l'air de refroidissement, **caractérisé en ce que** le cylindre sous pression (GC) est pourvu de deux entrées (62, 63) d'air sous pression, la première entrée (62) étant reliée à l'entrée (601) d'air atmosphérique par un premier clapet anti-retour (CV1), un refroidisseur d'air (AC), un compresseur alternatif (C) et un clapet d'entrée (V1) et la deuxième entrée (63) du cylindre sous pression GC étant reliée par une conduite de dérivation (66) d'air sous pression à une entrée (602) d'air sous pression via un second clapet anti-retour (CV2), tandis que les soupapes de décharge (V3, V4) à commande indépendante sont insérées entre les sorties (64, 65) d'air comprimé de nettoyage de la bouteille de pression (GC) et les entrées (4, 5) d'air comprimé de nettoyage vers les sorties (F11, F21) des filtres (F1, F2).
